# EUROPÄISCHE PATENTSCHRIFT

(11) **EP 2 483 834 B1**
(45) Veröffentlichungstag und Bekanntmachung des Hinweises auf die Patenterteilung: **08.04.2015**
(21) Anmeldenummer: 10759928.4
(22) Anmeldetag: 01.10.2010
(51) Int. Cl.: G06K 9/00, G06K 9/68, G06T 7/20, G08B 13/196

(54) **Verfahren und Vorrichtung zum Erkennen einer Fehldetektion eines Objekts in einem Bild**
Method and apparatus for the recognition of a false object detection in an image
Methode et appareil pour la reconnaissance d'une detection fausse d'un objet dans un image

(30) Priorität: 02.10.2009 DE 102009048117
(43) Veröffentlichungstag der Anmeldung: 08.08.2012
(73) Patentinhaber: Fraunhofer-Gesellschaft zur Förderung der angewandten Forschung e.V., 80686 München (DE)
(72) Erfinder: ERNST, Andreas, 92637 Weiden (DE); KUEBLBECK, Christian, - (DE); RUF, Tobias, 89331 Burgau (DE)
(74) Vertreter: Zinkler, Franz
(86) Internationale Anmeldenummer: PCT/EP2010/064651
(87) Internationale Veröffentlichungsnummer: WO 2011/039351

(56) Entgegenhaltungen:
- EP-A1- 0 445 334
- EP-A2- 1 873 732
- US-A1- 2005 104 961

## Beschreibung

Ausführungsbeispiele gemäß der Erfindung beziehen sich auf Bilderkennungssysteme und insbesondere auf ein Verfahren und eine Vorrichtung zum Erkennen einer Fehldetektion eines Objekts in einem Bild.

Es gibt einige bekannte Ansätze zur automatischen Detektion von Objekten (z.B. Gesichter, Autos, Personen, ...) in monochromen oder farbigen Einzelbildern und Bildsequenzen in Echtzeit (siehe z.B. "Christian Küblbeck und Andreas Ernst. Face Detection and tracking in video sequences" using the modified census transformation. Image Vision Computing, 24(6):564-572, June 2006", "Paul Viola und Michael Jones. Rapid Object Detection using a Boosted Cascade of Simple Features. In Proceedings IEEE Conf. on Computer Vision and Pattern Recognition, 2001"). Hierbei wird z.B. in einer Trainingsphase ein Modell erzeugt. Das Modell beinhaltet Informationen darüber, welche Merkmale in einem bestimmten Bildausschnitt an welcher Stelle berechnet werden und wie aus diesen Merkmalen die für die Klassifikation nötige Kennzahl berechnet wird. Bei der Klassifikation wird mithilfe dieser Kennzahlen bestimmt, ob ein Bildausschnitt das gesuchte Objekt zeigt. Dabei können Fehldetektionen auftreten, d.h. Bildausschnitte werden als das gesuchte Objekt klassifiziert, obwohl das Objekt nicht enthalten ist. Dies passiert insbesondere bei Bildausschnitten, die eine dem gesuchten Objekt ähnliche Struktur aufweisen. Besonders bei der Verarbeitung von Bildsequenzen kommt es vor, dass Fehldetektionen bei statischem Hintergrund wiederkehrend an den gleichen Stellen im Bild auftreten, begründet z.B. durch Rauscheffekte der Kamera.

Neben der Detektion von Objekten ist die Unterscheidung oder Segmentierung eines statischen Hintergrunds vom Vordergrund bekannt. Gängige Verfahren erstellen ein statistisches Modell des Hintergrunds. Durch Vergleich eines neuen Bildes mit dem Hintergrundmodell kann das Bild in Hintergrund und Vordergrund unterteilt werden (z.B. "Julio Cezar Silveira Jacques Jr und Cläudio Rosito Jung. Background Subtraction and Shadow Detection in Grayscale Video Sequences, 2005", "Sen-Ching S. Cheung und Chandrika Kamath, Robust techniques for background substraction in urban traffic video, 2004").

Beide Verfahren können zur Reduktion von Fehldetektionen kombiniert werden. Eine Möglichkeit besteht darin, zunächst Objekte zu detektieren, den Hintergrund zu segmentieren und anschließend alle Objekte, deren Bildausschnitt einen festgesetzten Anteil an Hintergrund überschreitet, als Fehldetektionen zu klassifizieren.

Eine andere Möglichkeit besteht darin, die Objektdetektion nur auf Bereiche im Bild anzuwenden, die als Vordergrund segmentiert wurden.

Die beschriebenen bekannten Verfahren zur automatischen Erkennung von Fehldetektionen haben Nachteile.

Die Hintergrundmodellierung erfordert bei gängigen Verfahren einen statischen Hintergrund. Das bedeutet, die Kamera muss fest installiert sein und der Hintergrund darf sich nicht verändern.

Befindet sich ein gesuchtes Objekt längere Zeit an einer festen Stelle im Bild, so kann es bei verschiedenen Ansätzen Teil des Hintergrundmodells werden. Damit kann ein gesuchtes Objekt durch die oben beschriebenen Verfahren fälschlicherweise als Fehldetektion klassifiziert werden.

Durch die getrennte Behandlung der Objektdetektion und Hintergrundmodellierung kann die nachträgliche Kombination der Ergebnisse zum Erkennen von Fehldetektionen zu nicht optimalen Ergebnissen führen.

Gute Verfahren zur Hintergrundsegmentierung sind häufig sehr rechenintensiv.

Die automatische Hintergrundsegmentierung ist in vielen Fällen stark beleuchtungsabhängig und fehlerbehaftet.

Die US 2005/104961 A1 offenbart ein Videoüberwachungssystem, in durch Trajektorenhypothesenvermehrung eine Trajektorenaufteilung und/oder Verschmelzung ermöglicht wird. Das Videoüberwachungssystem verwendet regelbasierte Schlussfolgerung und Mehrfachhypothesenbewertung, um ein bevorzugtes Verhalten basierend auf einer Bewegung durch ein Zonenmuster zu detektieren.

Die EP 0445334 A1 befasst sich mit einem Verfahren zur Erfassung von Intrudern mittels einer Videokamera und einer Videobildverarbeitungseinheit, die durch ein Differenzbildverfahren zweier zeitlich versetzter Videobilder Objekte erkennt.

Die Aufgabe der vorliegenden Erfindung ist es, ein verbessertes Konzept zum Erkennen einer Fehldetektion eines Objekts in einem Bild zu schaffen, das es ermöglicht, Fehldetektionen von Objekten in Bildern verlässlicher, schneller und/oder mit geringerem Aufwand zu erkennen.

Diese Aufgabe wird durch ein Verfahren gemäß Anspruch 1 oder eine Vorrichtung gemäß Anspruch 13 gelöst.

Ein charakteristisches Verhalten in Bezug auf Fehldetektionen kann z.B. das wiederkehrende, kurzzeitige Auftreten von Fehldetektionen bei statischem Hintergrund an gleichen Stellen im Bild sein.

Ausführungsbeispiele gemäß der Erfindung basieren auf dem Kerngedanken, dass durch eine Analyse von einer Mehrzahl von Bildern Eigenschaften eines erfassten Objekts bestimmt werden können, die man aus einem einzelnen Bild nicht erhalten kann. Zum Beispiel kann auf diese Art und Weise festgestellt werden, wann das erfasste Objekt zum ersten Mal detektiert wurde, wie oft das Objekt schon detektiert und wieder verloren wurde und/oder wie lange das Objekt seit dem ersten Auftreten detektiert oder nicht detektiert wurde. Durch die Bestimmung von solchen Eigenschaften können Fehldetektionen wesentlich einfacher, verlässlicher, schneller und/oder mit geringerem Aufwand erkannt werden als mit bekannten Methoden. Zum Beispiel muss für das beschriebene Verfahren keine fehleranfällige und rechenintensive Hintergrundsegmentierung stattfinden, wie es bei vielen bekannten Konzepten notwendig ist.

Zusätzlich können zur Erhöhung der Verlässlichkeit der Erkennung von Fehldetektionen eine statistische Eigenschaft des bilderzeugenden Detektors und/oder das charakteristische Verhalten des verwendeten Objekterfassers (Objektdetektors) in Bezug auf Fehldetektionen berücksichtigt werden.

Bei einigen Ausführungsbeispielen gemäß der Erfindung sind die Bilder der Mehrzahl von Bildern zeitlich aufeinanderfolgende Bilder. Die Mehrzahl von zeitlich aufeinanderfolgenden Bildern wird auch Bildsequenz genannt. In Bildsequenzen lässt sich das zeitliche Verhalten von erfassten Objekten verfolgen und Eigenschaften von diesen Objekten, die das zeitliche Verhalten der Objekte widerspiegeln, können bestimmt werden.

Bei weiteren Ausführungsbeispielen gemäß der Erfindung wird die Mehrzahl von Bildern von einer einzigen Kamera aufgenommen. Für das erfindungsgemäße Konzept ist es ausreichend, wenn die Mehrzahl von Bildern nur mit einer einzigen statisch installierten oder beweglichen Kamera aufgenommen wurde.

Bei einigen weiteren Ausführungsbeispielen gemäß der Erfindung werden für die Erkennung von Fehldetektionen zwei oder mehr bestimmte Eigenschaften eines Objekts in Kombination betrachtet. Dadurch kann die Wahrscheinlichkeit für das Erkennen einer Fehldetektion nochmals deutlich erhöht werden.

Ausführungsbeispiele gemäß der Erfindung werden nachfolgend Bezug nehmend auf die beiliegenden Figuren näher erläutert. Es zeigen:
- Fig. 1a: ein Flussdiagramm eines Verfahrens zum Erkennen von Fehldetektionen eines Objekts in einem Bild;
- Fig. 1b: ein Flussdiagramm eines Verfahrens zum Erkennen von Fehldetektionen eines Objekts in einem Bild; und
- Fig. 2: eine schematische Darstellung einer Vorrichtung zum Erkennen von Fehldetektionen eines Objekts in einem Bild.

Im Folgenden werden teilweise für Objekte und Funktionseinheiten, die gleiche oder ähnliche funktionelle Eigenschaften aufweisen, gleiche Bezugszeichen verwendet. Des Weiteren können optionale Merkmale der verschiedenen Ausführungsbeispiele miteinander kombinierbar oder zueinander austauschbar sein.

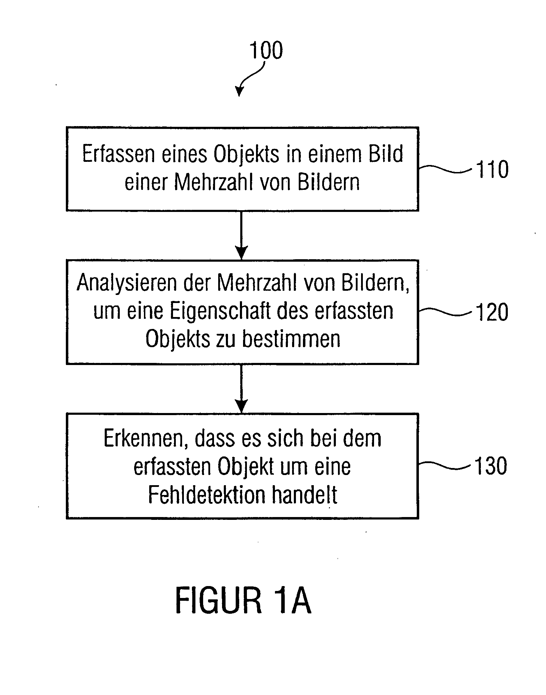

Fig. 1a zeigt ein Flussdiagramm eines Verfahrens 100 zum Erkennen einer Fehldetektion eines Objekts in einem Bild entsprechend eines Ausführungsbeispiels gemäß der Erfindung. Das Verfahren 100 umfasst ein Erfassen 110 eines Objekts in einem Bild einer

Mehrzahl von Bildern und ein Analysieren 120 der Mehrzahl von Bildern, um eine Eigenschaft des erfassten Objekts zu bestimmen. Dabei wird für jedes Bild der Mehrzahl von Bildern bestimmt, ob das jeweilige Bild das erfasste Objekt zeigt. Des Weiteren umfasst das Verfahren 100 ein Erkennen 130, dass es sich bei dem erfassten Objekt um eine Fehldetektion handelt. Das Erkennen 130 einer Fehldetektion basiert auf der bestimmten Eigenschaft des erfassten Objekts.

Bei der Mehrzahl von Bildern kann es sich beispielsweise um eine zeitliche Aufeinanderfolge von Bildern einer Kamera handeln. Die Mehrzahl von Bildern kann von einer oder mehreren Kameras aufgenommen werden.

Durch die Auswertung einer Mehrzahl von Bildern kann eine mögliche Fehldetektion wesentlich leichter, schneller, verlässlicher und/oder mit geringerem Aufwand erkannt werden als dies bei einer Auswertung von nur einem Bild oder einem Bild und einem Hintergrundbild möglich wäre. Im Vergleich zu Verfahren mit Hintergrundsegmentierung kann z.B. der Rechenaufwand deutlich reduziert werden.

Bei einem Objekt kann es sich beispielsweise um einen Menschen, ein Gesicht eines Menschen, ein Tier, ein Fahrzeug oder einen anderen beweglichen oder unbeweglichen Gegenstand handeln. Bei einer Fehldetektion wird z.B. ein Bildausschnitt des Bildes als zu identifizierendes Objekt erkannt, obwohl das Objekt in dem Bild oder dem Bildausschnitt nicht gezeigt ist. Dies kann durch vielerlei Gründe auftreten. Zum Beispiel können Rauscheffekte oder eine Bewegung der zur Aufnahme der Mehrzahl der Bilder verwendeten Kamera oder ein Auftreten von sehr ähnlichen Objekten in einem Bild oder der Mehrzahl von Bildern dafür verantwortlich sein.

Das Analysieren 120 der Mehrzahl von Bildern kann beispielsweise durch einen Vergleich der Bilder oder einen Vergleich von Bildausschnitten der Bilder der Mehrzahl von Bildern erfolgen. Das erfasste Objekt kann in den unterschiedlichen Bildern aufgrund großer Ähnlichkeiten der Bildausschnitte und/oder der Position und Größe des Objekts in den unterschiedlichen Bildern erkannt werden bzw. das erfasste Objekt und ein Objekt in einem anderen Bild können einander aufgrund großer Ähnlichkeiten der Bildausschnitte und/oder der Position und Größe zugeordnet werden.

Basierend auf der bestimmten Eigenschaft des erfassten Objekts kann erkannt werden, dass es sich bei dem erfassten Objekt um eine Fehldetektion handelt.

Für ein erfasstes Objekt können eine oder mehrere Eigenschaften bestimmt werden. Bei dem Analysieren der Mehrzahl von Bildern können beispielsweise zumindest zwei Eigenschaften des Objekts bestimmt werden und eine Fehldetektion basierend auf den zumindest zwei bestimmten Eigenschaften erkannt werden. So können durch eine Verknüpfung von Eigenschaften Regeln aufgestellt werden, nach denen eine Fehldetektion erkannt wird, wodurch die Wahrscheinlichkeit einer richtigen Fehldetektion deutlich erhöht werden kann.

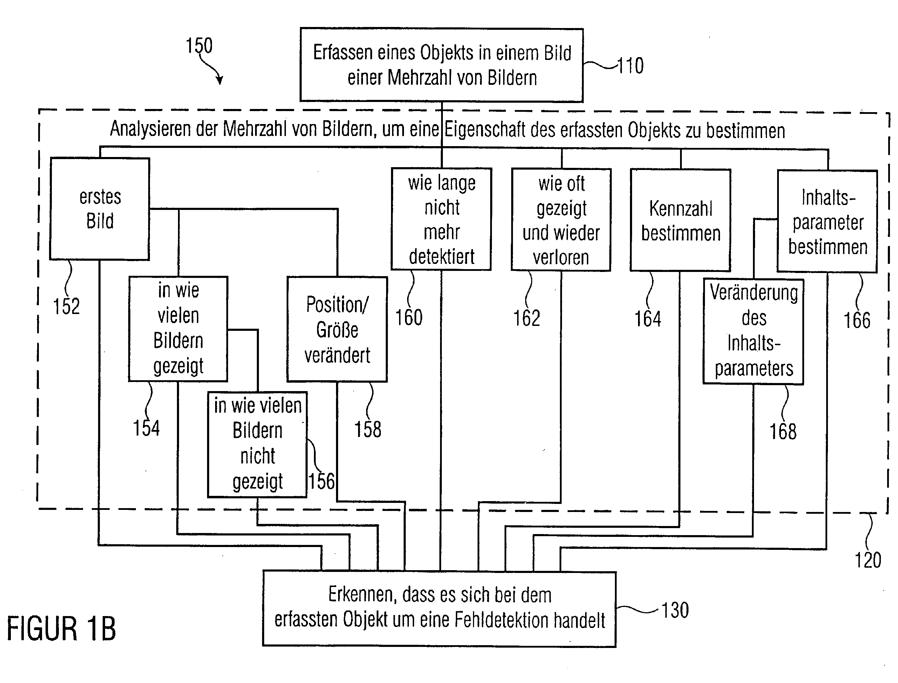

Fig. 1b zeigt ein Flussdiagramm eines Verfahrens 150 zum Erkennen einer Fehldetektion eines Objekts in einem Bild entsprechend eines Ausführungsbeispiels gemäß der Erfindung. Das gezeigte Verfahren 150 basiert auf dem in Fig. 1a gezeigten Verfahren und stellt mögliche Beispiele für Eigenschaften dar, die für ein erfasstes Objekt bestimmt werden können.

Die Analyse der Mehrzahl von Bildern kann beispielsweise als eine Eigenschaft des Objekts bestimmen 152, welches Bild der Mehrzahl von Bildern ein erstes Bild ist, in dem das Objekt zum ersten Mal gezeigt ist. Es wird also z.B. festgehalten, wann das Objekt zum ersten Mal detektiert wurde.

Zusätzlich kann als weitere Eigenschaft des Objekts bestimmt werden 154, in wie vielen auf das erste Bild folgenden Bildern der Mehrzahl von Bildern das Objekt gezeigt ist.

Wiederum zusätzlich kann danach festgestellt werden 156, in wie vielen auf die Bilder, in denen das Objekt gezeigt ist, direkt folgenden Bildern der Mehrzahl von Bildern das Objekt nicht gezeigt ist. In anderen Worten kann als Eigenschaften des Objekts festgestellt werden, wie lange das Objekt seit dem ersten Auftreten detektiert 154 oder nicht detektiert 156 wurde.

Zusätzlich oder alternativ kann als Eigenschaft des Objekts bestimmt werden 158, um wie viel sich eine Position oder Größe des Objekts in einem dem ersten Bild, in dem das Objekt auftritt, folgenden Bild in einem Vergleich zu einer Position oder Größe des Objekts in dem ersten Bild verändert hat. Es kann also z.B. bestimmt werden 158, wie viel sich das Objekt seit dem ersten Auftreten in Position und Größe verändert hat.

Wiederum zusätzlich oder alternativ kann als Eigenschaft des Objekts bestimmt werden 160, wann das Objekt zum letzten Mal in einem Bild gezeigt wurde oder in anderen Worten, wie lange wurde ein gefundenes Objekt bereits nicht mehr detektiert.

Alternativ oder zusätzlich kann als Eigenschaft bestimmt werden 162, wie oft das Objekt in einem Bild gezeigt ist, nachdem es in einem zeitlich direkt vorhergehenden Bild nicht gezeigt ist. In anderen Worten, kann festgestellt werden 162, wie oft das Objekt schon detektiert und wieder verloren wurde.

Des Weiteren kann beispielsweise beim Bestimmen, ob ein Bild das erfasste Objekt zeigt, als Eigenschaft des Objekts eine Kennzahl bestimmt werden 164. Die bestimmte Kennzahl ist z.B. ein Maß für die Wahrscheinlichkeit, dass das erfasste Objekt in dem Bild gezeigt ist. Es kann also beispielsweise als Eigenschaft des Objekts die Wahrscheinlichkeit gespeichert werden, mit der das erfasste Objekt in einem Bild der Mehrzahl von Bildern erkannt wurde.

Zusätzlich oder alternativ kann als Eigenschaft des Objekts ein Inhaltsparameter bestimmt werden 166. Der Inhaltsparameter stellt eine Bewertung eines Inhalts eines Bildausschnitts eines Bildes der Mehrzahl von Bildern dar, wobei der Bildausschnitt das erfasste Objekt zeigt. Dabei kann der Inhaltsparameter z.B. allgemein eine Bewertung darstellen, mit welcher Wahrscheinlichkeit ein erfasstes Objekt überhaupt ein Objekt sein kann.

Zusätzlich kann als Eigenschaft festgehalten werden 168, wie sich der Inhaltsparameter über die Zeit oder über die Mehrzahl von Bildern verändert. In anderen Worten, der Inhaltsparameter kann für eine Mehrzahl von aufeinanderfolgenden Bildern der Mehrzahl von Bildern bestimmt 166 und ausgewertet 168 werden.

Die in Fig. 1b gezeigten Beispiele für Eigenschaften eines erfassten Objekts können einzeln zum Erkennen einer Fehldetektion (z.B. Objekt n-mal detektieren und wieder verlieren = Fehldetektion) oder können zum Erkennen einer Fehldetektion miteinander kombiniert werden. Solche Kombinationen werden im Folgenden auch Regeln genannt. Z.B. kann eine Regel lauten, dass eine Fehldetektion vorliegt, wenn sich ein Objekt in nicht mehr als n aufeinanderfolgenden Bildern gezeigt hat und sich die Position und Größe nicht mehr als ein Schwellwert geändert hat. Eine andere Regel könnte lauten, dass eine Fehldetektion vorliegt, wenn das Objekt n-mal detektiert und wieder verloren wurde, sich der Inhaltsparameter mehr als ein Schwellwert geändert hat und die Kennzahl niedriger als ein vordefinierter Wert ist. Genauso können auf einfache Weise beliebige andere Kombinationen der Eigenschaften eines Objekts gebildet werden, um Fehldetektionen zu erkennen.

Bei einigen Ausführungsbeispielen gemäß der Erfindung ist die Mehrzahl von Bildern eine zeitliche Aufeinanderfolge von Bildern. Die zeitlich aufeinanderfolgenden Bilder der Mehrzahl von Bildern können je eine Zeitinformation aufweisen. Durch die Zeitinformation kann das absolute zeitliche Verhalten von erfassten Objekten bestimmt werden. Die Zeitinformation kann beispielsweise Uhrzeit und Datum umfassen. Alternativ können die zeitlich aufeinanderfolgenden Bilder der Mehrzahl von Bildern z.B. in gleichen zeitlichen Abständen zueinander aufgenommen worden sein. Dadurch kann das relative zeitliche Verhalten eines erfassten Objekts festgestellt werden. Das zeitliche Verhalten des erfassten Objekts kann durch eine oder mehrere bestimmte Eigenschaften des Objekts repräsentiert werden.

Die Mehrzahl von Bildern kann durch eine einzige Kamera oder durch mehrere Kameras aufgenommen worden sein. Durch einen Vergleich von einer oder mehrerer Eigenschaften eines erfassten Objekts in Bildern von unterschiedlichen Kameras kann die Wahrscheinlichkeit eines Erkennens einer Fehldetektion nochmals erhöht werden.

Die Mehrzahl von Bildern können von einer beweglichen oder unbeweglichen Kamera aufgenommen worden sein, wobei die Eigenschaft oder Eigenschaften des erfassten Objekts unter Berücksichtigung einer Bewegung der Kamera bestimmt werden.

Das erfasste Objekt kann mit der oder den bestimmten Eigenschaften in einer Datenbank gespeichert werden. Dabei kann das Objekt mit allen zugehörigen Eigenschaften wieder aus der Datenbank gelöscht werden, wenn das Objekt länger als eine maximale Zeitdauer nicht in einem Bild der Mehrzahl von Bildern gezeigt wurde oder wenn für dieses Objekt eine Fehldetektion ausgeschlossen werden kann.

Durch das Löschen von Objekten und deren Eigenschaften aus der Datenbank können die Daten in der Datenbank reduziert werden, wodurch das beschriebene Verfahren beschleunigt werden kann.

Einige Ausführungsbeispiele gemäß der Erfindung beziehen sich auf ein Verfahren zur automatischen Erkennung von Fehldetektionen in Bildsequenzen. In anderen Worten, die Erfindung beschreibt unter anderem ein Verfahren zur automatischen Erkennung von Fehldetektionen, basierend auf den Eigenschaften des Detektors und/oder der detektierten Objekte.

Dazu werden für ein, mehrere oder alle detektierten Objekte innerhalb der Bildsequenz (Mehrzahl von Bildern) ihre Eigenschaften erfasst. Dies können unter anderem z.B. sein:
Wann das Objekt zum ersten mal detektiert wurde.
Wie oft das Objekt schon detektiert und wieder verloren wurde.
Wie lange das Objekt seit dem ersten Auftreten detektiert bzw. nicht detektiert wurde.
Wie viel sich das Objekt seit dem ersten Auftreten in Position und Größe verändert hat.
Wie lange ein gefundenes Objekt bereits nicht mehr detektiert wurde.
Wie sicher die Detektion ist (wie hoch ist die beschriebene Kennzahl bei der Klassifikation des Objekts)
Wie der Inhalt des Bildausschnitts, der das Objekt repräsentiert ist.
Wie stark sich der Inhalt des Bildausschnitts über die Zeit ändert.

Zur Erfassung der Eigenschaften ist es z.B. notwendig, Detektionen des gleichen Objekts (dazu zählen auch Fehldetektionen) in einer Abfolge von Bildern einer Bildsequenz einander zuzuordnen).

Diese Zuordnung ist z.B. möglich, wenn ein Vergleich der Bildausschnitte eine große Ähnlichkeit aufweist oder/und auch wenn die Position und Größe der detektierten Objekte ähnelt (speziell in aufeinanderfolgenden Bildern).

Der Vergleich der Bildausschnitte kann z.B. auf einfache Weise durch Differenzbildung im Bildbereich erfolgen, aber auch auf komplexeren Verfahren zum Bildvergleich basieren (z.B. Vergleich beleuchtungsunabhängiger Merkmale und/oder Verwendung von Histogrammen zum Bildvergleich).

Die Erkennung von Fehldetektionen erfolgt z.B. auf Basis der erfassten Eigenschaften mithilfe eines Klassifikators. Der Klassifikator kann beispielsweise heuristisch, auf Expertenwissen basierend, auf Grund von Erfahrungen oder trainingsbasiert erstellt werden. Insbesondere kann ein regelbasierter Klassifikator zum Einsatz kommen. Für den im Stand der Technik beschriebenen Fall von wiederkehrenden Fehldetektionen an den gleichen Stellen bei statischem Hintergrund könnte eine einfache mögliche Regel z.B. lauten: Wenn ein Objekt mindestens N-mal detektiert und wieder verloren wurde und die Veränderung von Positionen und Größe einen Wert X nicht überschreitet und wenn die Kennzahl bei der Detektion nie einen sicheren Schwellwert überschritten hat, so handelt es sich um eine Fehldetektion.

Bei veränderlichem Hintergrund (z.B. bei Schwenks einer beweglichen Kamera) lassen sich entsprechend angepasste Regeln definieren.

Wenn ein gefundenes Objekt bereits seit einer festgelegten langen Zeitspanne nicht mehr detektiert wurde (und/oder es sicher nicht als Fehldetektion eingestuft wurde), können bei Bedarf die erfassten Eigenschaften wieder gelöscht werden.

Das beschriebene Verfahren zur automatischen Erkennung von Fehldetektionen in Bildsequenzen stützt sich beispielsweise auf eine Erfassung der (statistischen) Eigenschaften des Detektors (der Kamera) und/oder der detektierten (erfassten) Objekte innerhalb der Bildsequenz. Ein weiterer Aspekt ist eine Erkennung von Fehldetektionen auf Basis eines Klassifikators (z.B. regelbasiert, bzw. wie oben beschrieben) bezüglich der erfassten Eigenschaften. Gemäß einem weiteren Aspekt erfolgt eine Zuordnung von Detektionen in unterschiedlichen Bildern innerhalb einer Bildsequenz zu einem Objekt anhand von Position und Größe und/oder Vergleich der Bildausschnitte. Bei einer weiteren Alternative können die erfassten Eigenschaften eines Objekts gelöscht werden, wenn das Objekt bereits seit einer festgelegten Zeitspanne nicht mehr detektiert wurde und/oder das Objekt sicher nicht als Fehldetektion eingestuft wurde.

Zum Beispiel können bei einer fest installierten Kamera und statischem Hintergrund Fehldetektionen an immer gleicher Stelle und mit gleicher Größe im Bild wiederholt und auch über längere Zeit durchgehend auftreten. Dies wird begünstigt durch den unveränderlichen Bildinhalt des Hintergrunds. Dies sind Beispiele für charakteristisches Verhalten des verwendeten Objekterfassers (Objektdetektors) in Bezug auf Fehldetektionen.

Ein Beispiel für eine davon abgeleitete Regel ist: Wenn ein Objekt (eine Detektion) mindestens einen vorgegebenen Zeitraum lang gefunden wurde und Positions- und Größenänderung klein genug sind (unterhalb eines festgesetzten Schwellwerts liegen) und sich der durch das detektierte Objekt begrenzte Bildinhalt in diesem Zeitraum kaum (maximal um ein festgesetztes Höchstmaß) ändert, so handelt es sich um eine Fehldetektion. Als Wert für die Änderung des Bildinhalts kann beispielsweise eine einfache Differenzbildung im Bildbereich Anwendung finden, aber z.B. auch beleuchtungsunabhängige Merkmale und/oder Verfahren basierend auf Vergleich von Histogrammen.

Bei beweglichen Kameras oder Kameras mit Zoomobjektiven kann nicht davon ausgegangen werden, dass Fehldetektionen die von einem bestimmten Hintergrundbereich der aufgenommenen Szene verursacht werden immer an gleicher Stelle im Bild auftreten. Eine Zuordnung von Detektionen in unterschiedlichen Bildern kann in diesem Fall durch Vergleich des Bildinhalts der unterschiedlichen Objektregionen geschehen und somit als ein gefundenes Objekt in einer Mehrzahl von Bildern betrachtet werden.

Eine mögliche Regel für diesen Anwendungsfall könnte z.B. lauten: Wenn eine Detektion mindestens N-mal aufgetreten und wieder verschwunden ist und nie länger als eine vorgegebene Mindestzeit durchgehend detektiert wurde, so handelt es sich um eine Fehldetektion. Die Verwendung der Positions- und Größenänderung ist in diesem Anwendungsfall nicht angebracht.

Zur Erkennung einer Fehldetektion in einer Mehrzahl von Bildern kann auch ein Klassifikator zum Einsatz kommen, der mit Hilfe eines Trainingsverfahrens erzeugt wurde. Der Klassifikator lernt während eines Trainings anhand der bereits erläuterten Eigenschaften der erfassten Objekte und dem charakteristischen Verhalten des Objekterfassers (Objektdetektors) in Bezug auf Fehldetektionen den Unterschied zwischen richtig detektieren Objekten und Fehldetektionen.

Konkret kann sich dieser Trainingsprozess z.B. wie folgt gestalten. Als Grundlage dient eine bereits vorhandene Mehrzahl von Bildern (z.B. aufgezeichnetes Video etc.), die Objekte enthält, die durch das System gefunden werden sollen. Diese bereits vorhandene Mehrzahl von Bildern wird im Folgenden als Trainingsdaten bezeichnet. Beim Training werden die Trainingsdaten durch den Objekterfasser (Objektdetektor) verarbeitet und alle erfassten Objekte und deren Eigenschaften (z.B. von einem Experten) in korrekt gefundene Objekte und Fehldetektionen unterteilt. Die korrekt gefundenen Objekte und deren Eigenschaften werden als positive Klasse und die Fehldetektionen und ihre Eigenschaften als negative Klasse bezeichnet. Das Trainingsverfahren präsentiert dem Klassifikator Beispiele der positiven und negativen Klasse. Hierdurch erlernt der Klassifikator den Unterschied zwischen Eigenschaften für korrekt gefundene Objekte und Fehldetektionen. Für Klassifikatoren und Trainingsverfahren können gängige und aus dem Stand der Technik bekannten Verfahren zum Einsatz kommen, z.B. Support Vector Machines, Neuronale Netze etc. Nach dem Training können dem Klassifikator gefundene Objekte aus einer Mehrzahl von Bildern präsentiert werden und er liefert eine Entscheidung, ob es sich um ein korrekt gefundenes Objekt oder eine Fehldetektion handelt. Das Erkennen einer Fehldetektion und/oder das Erfassen eines Objekts kann somit, wie beschrieben, auf Trainingsdaten basieren.

Somit kann das Erkennen auf der bestimmten Eigenschaft des erfassten Objekts, sowie einem charakteristischen Verhalten des verwendeten Objekterfassers (Objektdetektors) in Bezug auf Fehldetektionen und/oder einer statistischen Eigenschaft des bilderzeugenden Detektors basieren.

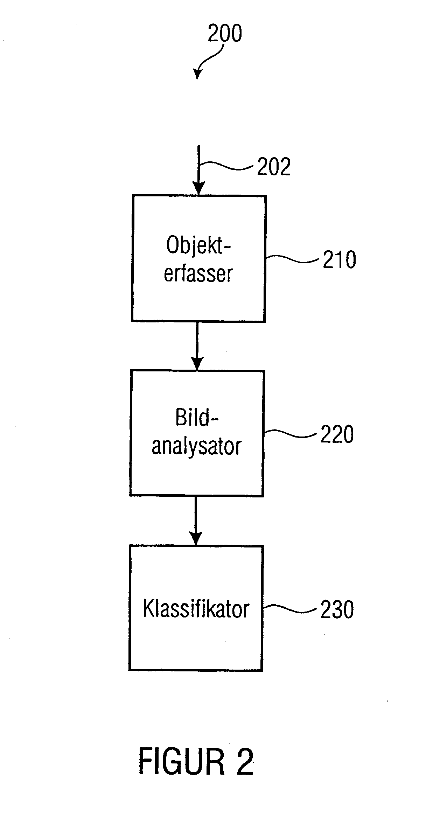

Fig. 2 zeigt ein Blockdiagramm einer Vorrichtung 200 zum Erkennen einer Fehldetektion eines Objekts in einem Bild entsprechend eines Ausführungsbeispiels gemäß der Erfindung. Die Vorrichtung 200 umfasst einen Objekterfasser 210, einen Bildanalysator 220 und einen Klassifikator 230. Der Objekterfasser 210 erfasst ein Objekt in einem Bild 202 einer Mehrzahl von Bildern. Der Bildanalysator 220 analysiert die Mehrzahl von Bildern, um eine Eigenschaft des erfassten Objekts zu bestimmen. Dabei wird für jedes Bild der Mehrzahl von Bildern bestimmt, ob das jeweilige Bild das erfasste Objekt zeigt. Des Weiteren kann der Klassifikator 230 basierend auf der bestimmten Eigenschaft des erfassten Objekts erkennen, dass es sich bei dem erfassten Objekt um eine Fehldetektion handelt.

Einige Ausführungsbeispiele gemäß der Erfindung beziehen sich auf eine Erkennung von Fehldetektionen, basierend auf parametrisierbaren Eigenschaften einer Detektion über die Zeit, in Verbindung mit einem Klassifikator.

Das erfindungsgemäße Konzept kann beispielsweise in Systemen und bei Verfahren zur Objektdetektion (z.B. Gesichter, Autos), bei Systemen zur Werbewirkungsanalyse (Zählen der Betrachter von Werbung) oder in Bilderkennungssystemen zum Erkennen oder Wiedererkennen eines Objekts in einem Bild angewandt werden. Dabei kann das erfindungsgemäße Konzept insbesondere (aber nicht nur) bei Systemen mit festinstallierter Kamera verwendet werden.

Einige Ausführungsbeispiele gemäß der Erfindung beziehen sich auf Bilderkennungssysteme, die eine Vorrichtung zum Erkennen einer Fehldetektion eines Objekts in einem Bild und eine Kamera umfassen. Die Kamera ist dabei ausgelegt, um die Mehrzahl von Bildern zu erzeugen.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein. Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft. Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist.

Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft. Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

## Patentansprüche

1. Verfahren (100; 150) zum Erkennen einer Fehldetektion eines Objekts in einem Bild, mit folgenden Schritten:
Erfassen (110) eines Objekts in einem Bild einer Mehrzahl von Bildern;
Analysieren (120) der Mehrzahl von Bildern, um eine Eigenschaft des erfassten Objekts zu bestimmen, wobei für jedes Bild der Mehrzahl von Bildern bestimmt wird, ob das jeweilige Bild das erfasste Objekt zeigt,
wobei die Bilder der Mehrzahl von Bildern zeitlich aufeinanderfolgende Bilder sind,
wobei bei der Analyse der Mehrzahl von Bildern als eine Eigenschaft des Objekts bestimmt wird (152), welches Bild der Mehrzahl von Bildern ein erstes Bild ist, in dem das Objekt zum ersten Mal gezeigt ist,
wobei bei der Analyse der Mehrzahl von Bildern als eine weitere Eigenschaft des Objekts bestimmt wird (154), in wie vielen auf das erste Bild direkt folgenden Bildern der Mehrzahl von Bildern das Objekt gezeigt ist,
wobei bei der Analyse der Mehrzahl von Bildern als eine Eigenschaft des Objekts bestimmt wird (158), um wie viel sich eine Position oder Größe des erfassten Objekts in einem dem ersten Bild folgenden Bild in einem Vergleich zu einer Position oder Größe des erfassten Objekts in dem ersten Bild verändert hat; und
Erkennen (130), dass es sich bei dem erfassten Objekt um eine Fehldetektion handelt, wenn das erfasste Objekt mindestens einen vorgegebenen Zeitraum lang gefunden wurde und Positions- und Größenänderung unterhalb eines festgesetzten Schwellwerts liegen und sich der durch das erfasste Objekt begrenzte Bildinhalt in diesem Zeitraum maximal um ein festgesetztes Höchstmaß ändert.

2. Verfahren gemäß Anspruch 1, wobei bei dem Analysieren (120) der Mehrzahl von Bildern zumindest zwei Eigenschaften des Objekts bestimmt werden, und wobei eine Fehldetektion zumindest basierend auf den beiden bestimmten Eigenschaften erkannt wird.

3. Verfahren gemäß Anspruch 1 oder 2, wobei die zeitlich aufeinanderfolgenden Bilder der Mehrzahl von Bildern je eine Zeitinformation aufweisen.

4. Verfahren gemäß einem der vorhergehenden Ansprüche, wobei bei der Analyse der Mehrzahl von Bildern als eine weitere Eigenschaft bestimmt wird (156), in wie vielen auf die Bilder, in denen das Objekt gezeigt ist, direkt folgenden Bildern der Mehrzahl von Bildern das Objekt nicht gezeigt ist.

5. Verfahren gemäß einem der Ansprüche 1 bis 4, wobei bei der Analyse der Mehrzahl von Bildern als eine Eigenschaft des Objekts bestimmt wird (160), wann das Objekt zum letzten Mal in einem Bild gezeigt wurde.

6. Verfahren gemäß einem der Ansprüche 1 bis 5, wobei bei der Analyse der Mehrzahl von Bildern als eine Eigenschaft des Objekts bestimmt wird (162), wie oft das Objekt in einem Bild gezeigt ist, nachdem es in einem zeitlich direkt vorhergehenden Bild nicht gezeigt ist.

7. Verfahren gemäß einem der Ansprüche 1 bis 6, wobei bei dem Bestimmen, ob ein Bild das erfasste Objekt zeigt, als Eigenschaft des Objekts eine Kennzahl bestimmt wird (164), wobei die bestimmte Kennzahl ein Maß für die Wahrscheinlichkeit ist, dass das erfasste Objekt in dem Bild gezeigt ist.

8. Verfahren gemäß einem der Ansprüche 1 bis 7, wobei bei der Analyse der Mehrzahl von Bildern als eine Eigenschaft des Objekts ein Inhaltsparameter bestimmt wird (166), wobei der Inhaltsparameter eine Bewertung eines Inhalts eines Bildausschnitts eines Bildes der Mehrzahl von Bildern darstellt, wobei der bewertete Bildausschnitt das erfasste Objekt zeigt.

9. Verfahren gemäß Anspruch 8, wobei der Inhaltsparameter für eine Mehrzahl von aufeinanderfolgenden Bildern der Mehrzahl von Bildern bestimmt und ausgewertet (168) wird.

10. Verfahren gemäß einem der Ansprüche 1 bis 9, wobei die Mehrzahl von Bildern von einer einzigen Kamera aufgenommen wurden.

11. Verfahren gemäß einem der Ansprüche 1 bis 10, wobei die Mehrzahl von Bildern von einer beweglichen Kamera aufgenommen wurde, wobei die Eigenschaft unter Berücksichtigung einer Bewegung der Kamera bestimmt wird.

12. Verfahren gemäß einem der Ansprüche 1 bis 11, mit folgenden weiteren Schritten:
Speichern des erfassten Objekts mit seiner bestimmten Eigenschaft in einer Datenbank; und
Löschen des erfassten Objekts mit allen zugehörigen Eigenschaften aus der Datenbank, wenn das Objekt länger als eine maximale Zeitdauer nicht in einem Bild der Mehrzahl von Bildern gezeigt wurde oder wenn eine Fehldetektion ausgeschlossen wurde.

13. Vorrichtung (200) zum Erkennen einer Fehldetektion eines Objekts in einem Bild, mit folgenden Merkmalen:
einem Objekterfasser (210), der ausgelegt ist, um ein Objekt in einem Bild (202) einer Mehrzahl von Bildern zu erfassen;
einem Bildanalysator (220), der ausgelegt ist, um die Mehrzahl von Bildern zu analysieren, um eine Eigenschaft des erfassten Objekts zu bestimmen, wobei für jedes Bild der Mehrzahl von Bildern bestimmt wird, ob das jeweilige Bild das erfasste Objekt zeigt,
wobei die Bilder der Mehrzahl von Bildern zeitlich aufeinanderfolgende Bilder sind,
wobei bei der Analyse der Mehrzahl von Bildern als eine Eigenschaft des Objekts bestimmt wird (152), welches Bild der Mehrzahl von Bildern ein erstes Bild ist, in dem das Objekt zum ersten Mal gezeigt ist,
wobei bei der Analyse der Mehrzahl von Bildern als eine weitere Eigenschaft des Objekts bestimmt wird (154), in wie vielen auf das erste Bild direkt folgenden Bildern der Mehrzahl von Bildern das Objekt gezeigt ist,
wobei bei der Analyse der Mehrzahl von Bildern als eine Eigenschaft des Objekts bestimmt wird (158), um wie viel sich eine Position oder Größe des erfassten Objekts in einem dem ersten Bild folgenden Bild in einem Vergleich zu einer Position oder Größe des erfassten Objekts in dem ersten Bild verändert hat; und
einem Klassifikator (230), der ausgelegt ist, um zu erkennen, dass es sich bei dem erfassten Objekt um eine Fehldetektion handelt, wenn das erfasste Objekt mindestens einen vorgegebenen Zeitraum lang gefunden wurde und Positions- und Größenänderung unterhalb eines festgesetzten Schwellwerts liegen und sich der durch das erfasste Objekt begrenzte Bildinhalt in diesem Zeitraum maximal um ein festgesetztes Höchstmaß ändert.

14. Bilderkennungssystem mit folgenden Merkmalen:
einer Vorrichtung zum Erkennen einer Fehldetektion eines Objekts in einem Bild gemäß Anspruch 13; und
eine Kamera, die ausgelegt ist, um die Mehrzahl von Bildern zu erzeugen.

15. Computerprogramm mit einem Programmcode zur Durchführung des Verfahrens gemäß einem der Ansprüche 1 bis 12, wenn das Computerprogramm auf einem Computer oder Mikrocontroller abläuft.

## Claims

1. Method (100; 150) for recognizing an erroneous detection of an object in an image, comprising:
sensing (110) an object in an image of a plurality of images;
analyzing (120) the plurality of images for determining a characteristic of the sensed object, wherein it is determined for each image of the plurality of images whether the respective image shows the sensed object,
wherein the images of the plurality of images are time-sequential images,
wherein, during the analysis of the plurality of images, it is determined (152), as a characteristic of the object, which image of the plurality of images is a first image where the object is shown for the first time,
wherein, during the analysis of the plurality of images, it is determined (154), as a further characteristic of the object, in how many images of the plurality of images directly following the first image the object is shown,
wherein, during the analysis of the plurality of images, it is determined (158), as a characteristic of the object, by how much a position or size of the sensed object has changed in an image following the first image compared to a position or size of the sensed object in the first image; and
recognizing (130) that the sensed object is an erroneous detection when the sensed object has been found for at least a predetermined period, and position and size changes lie below a predetermined threshold, and the image content limited by the sensed object changes maximally by a predetermined upper limit during this period.

2. Method according to claim 1, wherein during analyzing (120) the plurality of images at least two characteristics of the object are determined, and wherein an erroneous detection is recognized at least based on the two determined characteristics.

3. Method according to claim 1 or 2, wherein the time-sequential images of the plurality of images comprise one time information each.

4. Method according to one of the previous claims, wherein, during the analysis of the plurality of images, it is determined (156), as a further characteristic, in how many images of the plurality of images directly following the images where the object is shown, the object is not shown.

5. Method according to one of claims 1 to 4, wherein, during the analysis of the plurality of images, it is determined (160), as a characteristic of the object, when the object has been shown last within an image.

6. Method according to one of claims 1 to 5, wherein, during the analysis of the plurality of images, it is determined (166), as a characteristic of the object, how many times the object is shown in an image after it has not been shown in an image directly preceding in time.

7. Method according to one of claims 1 to 6, wherein, during determining whether an image shows the sensed object, an index is determined (164) as characteristic of the object, wherein the determined index is a measure for the probability that the sensed object is shown in the image.

8. Method according to one of claims 1 to 7, wherein, during the analysis of the plurality of images, a content parameter is determined (166) as a characteristic of the object, wherein the content parameter represents an evaluation of a content of an image section of an image of the plurality of images, wherein the evaluated image section shows the sensed object.

9. Method according to claim 8, wherein the content parameter is determined and evaluated (168) for a plurality of subsequent images of the plurality of images.

10. Method according to one of claims 1 to 9, wherein the plurality of images is captured by a single camera.

11. Method according to one of claims 1 to 10, wherein the plurality of images has been captured by a movable camera, wherein the characteristic is determined by considering a movement of the camera.

12. Method according to one of claims 1 to 11, comprising:
storing the sensed object with its determined characteristic in a database; and
deleting the sensed object with all allocated characteristics from the database when the object has not been shown in an image of the plurality of images for more than a maximum time period or when erroneous detection has been precluded.

13. Apparatus (200) for recognizing an erroneous detection of an object in an image, comprising:
an object sensor (210) that is implemented to sense an object in an image (202) of a plurality of images;
an image analyzer (220) that is implemented to analyze the plurality of images for determining a characteristic of the sensed object, wherein it is determined for each image of the plurality of images whether the respective image shows the sensed object,
wherein the images of the plurality of images are time-sequential images,
wherein, during the analysis of the plurality of images, it is determined (152), as a characteristic of the object, which image of the plurality of objects is a first image where the object is shown for the first time,
wherein, during the analysis of the plurality of images, it is determined (154), as a further characteristic of the object, in how many images of the plurality of images directly following the first image the object is shown.
wherein, during the analysis of the plurality of images, it is determined (158), as a characteristic of the object, by how much a position or size of the sensed object has changed in an image following the first image compared to a position or size of the sensed object in the first image; and
a classifier (230) that is implemented to recognize that the sensed object is an erroneous detection when the sensed object has been found for at least a predetermined period, and position and size changes lie below a predetermined threshold, and the image content limited by the sensed object changes maximally by a predetermined upper limit during this period.

14. Image recognition system comprising:
an apparatus for recognizing an erroneous detection of an object in an image according to claim 13; and
a camera that is implemented to generate the plurality of images.

15. Computer program having a program code for performing the method according to one of claims 1 to 12 when the computer program runs on a computer or microcontroller.

## Revendications

1. Procédé (100; 150) pour la reconnaissance d'une fausse détection d'un objet dans une image, aux étapes suivantes consistant à:
détecter un objet dans une image parmi une pluralité d'images (110);
analyser (120) la pluralité d'images, pour déterminer une propriété de l'objet détecté, pour chaque image de la pluralité d'images étant déterminé si l'image respective montre l'objet détecté,
dans lequel les images de la pluralité d'images sont des images successives dans le temps,
dans lequel lors de l'analyse de la pluralité d'images est déterminé (152), comme propriété de l'objet, quelle image de la pluralité d'images est une première image dans laquelle l'objet est montré pour la première fois,
dans lequel lors de l'analyse de la pluralité d'images est déterminé (154), comme autre propriété de l'objet, le nombre d'images parmi la pluralité d'images suivant directement la première image dans lesquelles l'objet est montré,
dans lequel lors de l'analyse de la pluralité d'images est déterminé (158), comme propriété de l'objet, de combien une position ou grandeur de l'objet détecté dans une image suivant la première image a changé par rapport à une position ou grandeur de l'objet détecté dans la première image; et
reconnaître (130) qu'il s'agit, pour l'objet détecté, d'une fausse détection lorsque l'objet détecté a été trouvé pendant au moins un laps de temps prédéterminé et que les changements de position et de grandeur se situent au-dessous d'une valeur de seuil fixée et que le contenu d'image limité par l'objet détecté a changé pendant ce laps de temps tout au plus d'une mesure maximale fixée.

2. Procédé selon la revendication 1, dans lequel lors de l'analyse (120) la pluralité d'images sont déterminées au moins deux propriétés de l'objet, et dans lequel une fausse détection est reconnue au moins sur base des deux propriétés déterminées.

3. Procédé selon la revendication 1 ou 2, dans lequel les images successives dans le temps parmi la pluralité d'images présentent, chacune, une information de temps.

4. Procédé selon l'une des revendications précédentes, dans lequel lors de l'analyse de la pluralité d'images est déterminé (156), comme une autre propriété, le nombre d'images parmi la pluralité d'images suivant directement les images dans lesquelles est montré l'objet dans lesquelles l'objet n'est pas montré.

5. Procédé selon l'une des revendications 1 à 4, dans lequel lors de l'analyse de la pluralité d'images est déterminé (160), comme propriété de l'objet, quand l'objet a été montré pour la dernière fois dans une image.

6. Procédé selon l'une des revendications 1 à 5, dans lequel lors de l'analyse de la pluralité d'images est déterminé (162), comme propriété de l'objet, le nombre de fois que l'objet est montré dans une image après qu'il n'est pas montré dans une image immédiatement précédente dans le temps.

7. Procédé selon l'une des revendications 1 à 6, dans lequel lors de la détermination de si une image montre l'objet détecté est déterminé (164), comme propriété de l'objet, une valeur intrinsèque, la valeur intrinsèque déterminée étant une mesure de la probabilité que l'objet détecté soit montré dans l'image.

8. Procédé selon l'une des revendications 1 à 7, dans lequel lors de l'analyse de la pluralité d'images est déterminé (166), comme propriété de l'objet, un paramètre de contenu, le paramètre de contenu représentant une évaluation d'un contenu d'un segment d'une image parmi la pluralité d'images, le segment évalué montrant l'objet détecté.

9. Procédé selon la revendication 8, dans lequel le paramètre de contenu est déterminé et évalué (168) pour une pluralité d'images successives parmi la pluralité d'images.

10. Procédé selon l'une des revendications 1 à 9, dans lequel la pluralité d'images sont prises par une seule caméra.

11. Procédé selon l'une des revendications 1 à 10, dans lequel la pluralité d'images ont été prises par une caméra mobile, la propriété étant déterminée en tenant compte d'un mouvement de la caméra.

12. Procédé selon l'une des revendications 1 à 11, aux autres étapes suivantes consistant à:
mémoriser l'objet détecté avec sa propriété déterminée dans une banque de données; et
effacer l'objet détecté avec toutes les propriétés associées de la banque de données si l'objet n'a pas été montré pendant un laps de temps plus long qu'un laps de temps maximum dans une image parmi la pluralité d'images, ou si une fausse détection a été exclue.

13. Dispositif (200) pour la reconnaissance d'une fausse détection d'un objet dans une image, aux caractéristiques suivantes:
un détecteur d'image (210) conçu pour détecter un objet dans une image (202) parmi une pluralité d'images;
un analyseur d'image (220) conçu pour analyser la pluralité d'images pour déterminer une propriété de l'objet détecté, pour chaque image parmi la pluralité d'images étant déterminé si l'image respective montre l'objet détecté,
dans lequel les images parmi la pluralité d'images sont des images successives dans le temps,
dans lequel lors de l'analyse de la pluralité d'images est déterminé (152), comme propriété de l'objet, quelle image de la pluralité d'images est une première image dans laquelle l'objet est montré pour la première fois,
dans lequel lors de l'analyse de la pluralité d'images est déterminé (154), comme autre propriété de l'objet, le nombre d'images de la pluralité d'images suivant directement la première image dans lesquelles l'objet est montré,
dans lequel lors de l'analyse de la pluralité d'images est déterminé (158), comme propriété de l'objet, de combien une position ou grandeur de l'objet détecté dans une image suivant la première image a changé par rapport à une position ou grandeur de l'objet détecté dans la première image; et
un classificateur (230) qui est conçu pour reconnaître qu'il s'agit, pour l'objet détecté, d'une fausse détection lorsque l'objet détecté a été trouvé pendant au moins un laps de temps prédéterminé et que les changements de position et de grandeur se situent au-dessous d'une valeur de seuil fixée et que le contenu d'image limité par l'objet détecté a changé pendant ce laps de temps tout au plus d'une mesure maximale fixée..

14. Système de reconnaissance d'image aux caractéristiques suivantes:
un dispositif pour la reconnaissance d'une fausse détection d'un objet dans une image selon la revendication 13; et
une caméra qui est conçue pour générer la pluralité d'images.

15. Programme d'ordinateur avec un code de programme pour réaliser le procédé selon l'une des revendications 1 à 12 lorsque le programme d'ordinateur est exécuté sur un ordinateur ou un microcontrôleur.
